# EUROPÄISCHE PATENTANMELDUNG

(11) **EP 0 790 746 A2**
(43) Veröffentlichungstag der Anmeldung: **20.08.1997**
(21) Anmeldenummer: 96115100.8
(22) Anmeldetag: 20.09.1996
(51) Int. Cl.: H04Q 1/14, H02B 1/01, G02B 6/44, H01R 43/26

(54) **Automatische Rangier- und Verteilereinrichtung für Telekommunikations- und Datenleitungen**

(30) Priorität: 29.09.1995 DE 19537533
(71) Anmelder: KRONE Aktiengesellschaft, D-14167 Berlin (DE)
(72) Erfinder: Sander, Claus, Dipl.-Ing., 10717 Berlin (DE); Paasch, Hans-Ulrich, Dipl.-Ing., 12157 Berlin (DE); Dohnke, Ingo, Dipl.-Ing., 14513 Teltow (DE); Warmbold, Ulrich, Dipl.-Ing., 14167 Berlin (DE); Hegner, Gunter, 13509 Berlin (DE); Faika, Hans-Joachim, Dipl.-Ing., 10967 Berlin (DE)

(57) **Zusammenfassung**

Die Erfindung bezieht sich auf eine automatische Rangier- und Verteilereinrichtung für Telekommunikations- und Datenleitungen, mit Anschlußterminals für Amts- und Teilnehmerkabel und mit einem fernsteuerbaren Beschaltungsgerät mit einem Greifelement nach dem Patent Nr. 44 20 806.

Um eine mit Anschlußleisten versehene Rangier- und Verteilereinrichtung zu automatisieren, sind die Anschlußterminals in radial zu einer Zentralachse ausgerichteten Anschlußleisten 4 angeordnet, das Beschaltungsgerät 16 ist in der Zentralachse 9 schwenkbar und das Greifelement 21 ist am Beschaltungsgerät 16 radial ausschwenkbar gelagert. Um die Rangier- und Verteilereinrichtung sowohl mit Kupfer- als auch mit Glasfaserkabeln beschalten zu können, ohne Veränderungen vornehmen zu müssen, sind die Ansteuerungswege Z an den Leisten 4,5 für Glasfaser- und für Kupferkabelanwendung gleich lang gestaltet.

## Beschreibung

Die Erfindung bezieht sich auf eine automatische Rangier- und Verteilereinrichtung für Telekommunikations- und Datenleitungen, mit Anschlußterminals für Amts- und Teilnehmerkabel und mit einem fernsteuerbaren Beschaltungsgerät mit einem Greifelement nach dem Patent Nr. 44 20 806.

Eine automatische Rangier- und Verteilereinrichtung der gattungsgemäßen Art ist in dem Patent Nr.44 20 806 beschrieben.

Bei dieser automatischen Rangier- und Verteilereinrichtung ist vorgesehen, daß die Anschlußterminals in radial zu einer Zentralachse ausgerichteten Anschlußleisten angeordnet, das Beschaltungsgerät in der Zentralachse schwenkbar und das Greifelement an dem Beschaltungsgerät radial ausschwenkbar gelagert sind. Hierbei werden die Teilnehmerkabel mit den Anschlußterminals der Anschlußleisten fest verbunden und die Amtskabel, die als Bündel, ausgehend vom Ende der Zentralachse, kegelförmig aufgefächert sind, werden mittels des Greifelementes des Beschaltungsgerätes mit den Anschlußterminals der Anschlußleisten verbunden. Das Greifelement kann hierbei in einfacher Weise zwischen den strahlenförmig um die Zentralachse herumgruppierten Anschlußleisten ausgeschwenkt und im eingeschwenkten Zustand um die Zentralachse gedreht werden, ohne daß Behinderungen durch die angeschlossenen Amtskabel erfolgen.

Die Anschlußleisten sind dabei insbesondere als Sekanten zu einer fiktiven Kugelkalotte oder kreisbogenförmig ausgeformt in der fiktiven Kugelkalotte angeordnet, deren Mittelpunkt in der Zentralachse liegt. Im letzteren Fall sind die kegelförmig aufgefächerten Amtskabel alle von gleicher Länge und können so mittels des Greifelementes in jeder gewünschten Position an einem in einer Anschlußleiste befindlichen Anschlußterminal angeschlossen werden. Hierzu weisen die Anschlußleisten Steckelemente zur Aufnahme von an den Enden der Amtskabel angebrachten Steckern auf.

Zur Fixierung vorübergehend oder längerfristig nicht benötigter Amtskabel sind neben den auf einem Teilbereich der fiktiven Kugelkalotte angeordneten, mit Schneidklemm-Kontaktelementen zum Beschalten mit den Teilnehmerkabeln versehenen Anschlußleisten auf einem anderen Teilbereich der Kugelkalotte nur mit Steckelementen versehene Depotleisten angeordnet.

Das Gehäuse wird aus einer die in der fiktiven Kugelkalotte angeordneten Anschluß- und Depotleisten umgebenden, nach unten offenen Glocke und einem kegelförmigen Gehäuse gebildet, das von der Glocke überspannt ist und das das mit dem freien Ende nach unten vertikal angeordnete Beschaltungsgerät aufnimmt. Die derart ausgebildete automatische Verteilereinrichtung kann sowohl mittels einer Wandhalterung oder einer Säule oberhalb des Bodens oder auch unterhalb des Erdboden angeordnet sein, wobei sich die automatische Verteilereinrichtung in der Unterflurversion der Glocke nebst Gehäuse nach dem Caisson-Prinzip hochwasserfest installieren läßt.

Die automatische Rangier- und Verteilereinrichtung eignet sich zwar für die Anwendung sowohl für Kupferkabel als auch für Lichtwellenleiter, erfordert aber bei Einsatz von Lichtwellenleitern einige spezifische Anpassungen.

Der Erfindung liegt von daher die Aufgabe zugrunde, eine gattungsgemäße Rangier- und Verteilereinrichtung so weiterzuentwickeln, daß sie sowohl mit Kupfer- als auch mit Glasfaserkabeln beschaltet werden kann, ohne daß Veränderungen vorgenommen werden müssen.

Die Erfindung ist nachfolgend anhand eines Ausführungsbeispieles einer erfindungsgemäßen automatischen Rangier- und Verteilereinrichtung näher erläutert. Es zeigen:
- Fig. 1: einen prinzipiellen Vertikalschnitt durch die Einrichtung,
- Fig. 2: einen Schnitt gemäß der Linie II-II in Fig.1,
- Fig. 3: die Draufsicht auf einen, die Anschluß- und Depotleisten aufnehmenden Zwischenboden,
- Fig. 4: die Ansicht der durch Glocke und kegelförmiges Gehäuse geschlossenen Verteilereinrichtung,
- Fig. 5: die Verteilereinrichtung gemäß Fig. 4 in Wandmontage,
- Fig. 6: die Verteilereinrichtung gemäß Fig. 4 in Unterflurmontage im Betriebszustand,
- Fig. 7: die Verteilereinrichtung gemäß Fig. 6 im Montagezustand und
- Fig. 8: eine schematische, perspektivische Darstellung (Ausschnitt) einer Leistenanordnung mit beidseitig kreisförmig ausgeformten Leisten und dargestelltem Transport- bzw. Ansteuerungsweg.

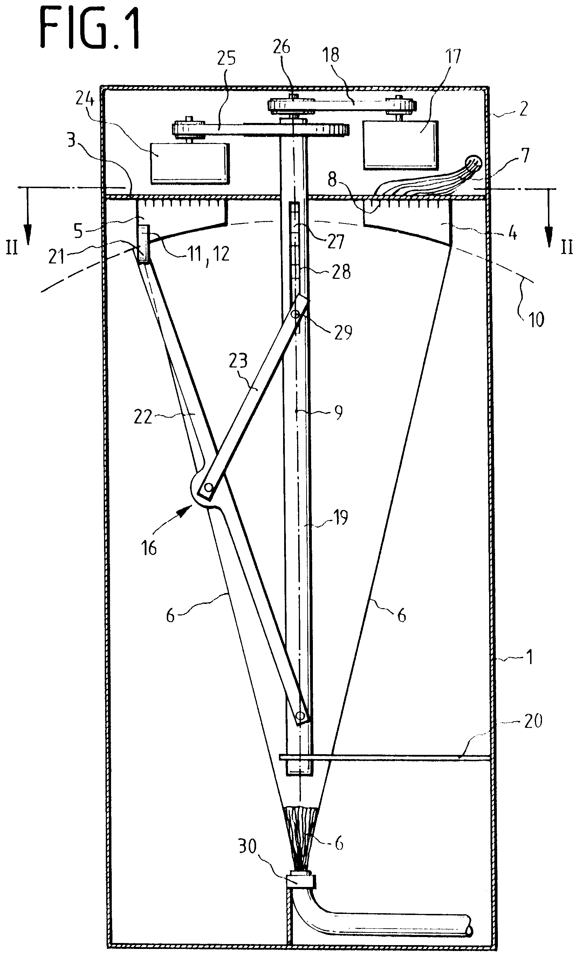

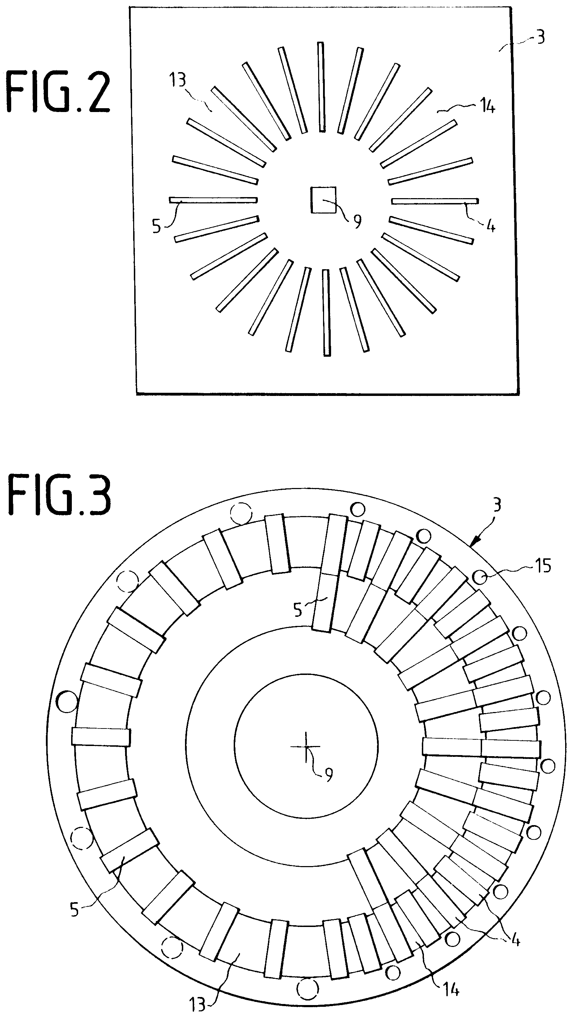

Die automatische Rangier- und Verteilereinrichtung für Telekommunikations- und Datenleitungen umfaßt ein in der Fig. 1 kastenförmiges und in den weiteren Ausführungsbeispielen kegelförmiges Gehäuse 1 und eine das Gehäuse 1 nach oben abschließende deckelartige Glocke 2, beide aus Kunststoff oder Aluminium. Im Gehäuse 1 sind unterhalb der Glocke 2 an einem Zwischenboden 3 eine Vielzahl von Anschluß- und Depotleisten 4,5 angeordnet, von denen die Anschlußleisten 4 mit Anschlußterminals für Amts- und Teilnehmerkabel 6 bzw. 7 versehen sind. Die Teilnehmerkabel 7 sind unterhalb der Glocke 2 an Anschlußterminals bildende Schneid-Klemm-Kontaktelemente 8 der Anschlußleisten 4 angeschlossen. Wie es die Figuren 2 und 3 zeigen, sind die mit den Anschlußterminals, z.B. in Form der Schneidklemm-Kontaktelemente 8, versehenen Anschlußleisten 4 und die Depotleisten 5 radial bzw. strahlenförmig zur Zentralachse 9 der Verteilereinrichtung ausgerichtet angeordnet. Ferner sind die Anschlußleisten 4 und auch die Depotleisten 5, wie es in Fig. 1 dargestellt ist, mindestens auf einer Seite kreisbogenförmig ausgeformt und so in einer fiktiven Kugelkalotte 10 angeordnet, deren Mittelpunkt in der Zentralachse 9 liegt. Alternativ können die Anschluß- und Depotleisten 4 bzw. 5 auch als Tangenten oder Sekanten zur fiktiven Kugelkalotte 10 angeordnet sein, wobei die Senkrechte zur Oberseite der ausgerichteten Anschluß- oder Depotleiste 4,5 durch den in der Zentralachse 9 liegenden Mittelpunkt der fiktiven Kugelkalotte 10 verläuft.

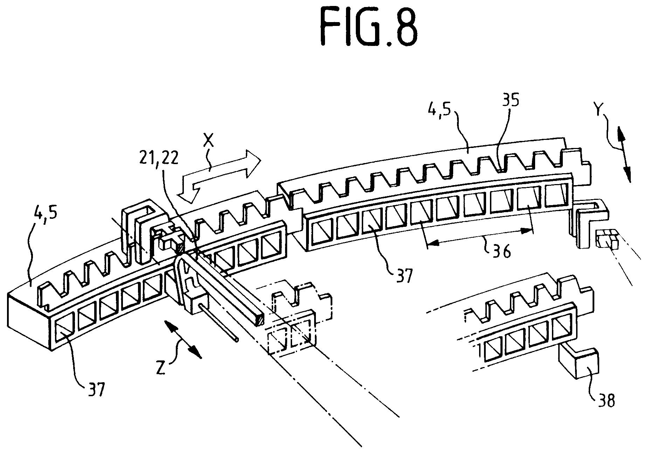

In einer weiteren in Fig. 8 dargestellten Ausführungsform sind die Anschluß- und Depotleisten 4,5 auf beiden Seiten, also auch auf der Kabelanschlußseite, kreisbogenförmig ausgeformt.

Sowohl die Anschluß- als auch die Depotleisten 4, 5 sind mit Steckelementen 11 zur Aufnahme von an den Enden der Amtskabel 6 angebrachten Steckern 12 versehen. Die Stecker 12 weisen Griffflächen auf, damit sie auch manuell gezogen werden können.

Die beschalteten Leisten 4,5 sind von der Oberseite her zum Stecken von nicht dargestellten Prüfsteckern zugänglich.

Wie es die Figuren 2 und 3 zeigen, sind auf einem Teilbereich der fiktiven Kugelkalotte 10 Anschlußleisten 4 mit Schneid-Klemm-Kontaktelementen 8 zum Beschalten mit den Teilnehmerkabeln 7 und auf einem anderen Teilbereich der fiktiven Kugelkalotte 10 nur mit den Steckelementen 11 versehene Depotleisten 5 angeordnet. Die Dichte der in Fig. 3 rechts dargestellten Anschlußleisten 4 ist größer als die Dichte der in Fig. 3 links dargestellten Depotleisten 5. Im Beispiel sind für drei Anschlußleisten 4 eine Depotleiste 5 vorgesehen.Wesentlich ist, daß sowohl zwischen den strahlenförmig angeordneten Depotleisten 5 als auch zwischen den ebenfalls strahlenförmig angeordneten Anschlußleisten 4 radiale Freiräume 13,14 verbleiben, deren Zweck später noch erläutert werden wird. Die in Fig. 3 dargestellte Ausführungsform des Zwischenbodens 3 umfaßt am äußeren Umfang noch eine Anzahl von Durchgangsöffnungen 15, die der Kabeldurchführung dienen.

Innerhalb des in der Ausführungsform kegelförmigen Gehäuses 1 ist ein Beschaltungsgerät 16 angeordnet, das aus einer in der Zentralachse 9 gelagerten, von einem Elektromotor 17 und einem Riementrieb 18 motorisch drehangetriebenen Drehachse 19, die im Zwischenboden 3 und in einem Lagerarin 20 gelagert ist, einem am freien Ende der Drehachse 19 angelenkten, am freien Ende ein Greifelement 21 tragenden Schwenkarm 22 und einem am Schwenkarm 22 etwa mittig angreifenden Ausstellarm 23 gebildet, dessen anderes Ende an einem in der Drehachse 19 gelagerten, mittels eines Elektromotors 24 und eines Riementriebes 25 motorisch angetriebenen Vertikalantrieb 26 angelenkt ist. Dieser ist aus einer drehbar in der Drehachse 19 gelagerten, vom Motor 24 über den Riementrieb 25 drehangetriebenen Spindel 27 mit einer darauf drehbaren, in einer Vertikalnut 28 der Drehachse 19 geführten Spindelmutter 29 gebildet, die am Ende des Ausstellarmes 23 befestigt ist. Durch eine vom Elektromotor 24 über den Riementrieb 25 eingeleitete Drehbewegung der Spindel 27 wird die Spindelmutter 29 in der Vertikalnut 28 der Drehachse 19 auf- und abbewegt, durch der Ausstellarm 23 betätigt wird und wiederum den Schwenkarm 22 auswärts und einwärts schwenkt. Somit kann das am freien Ende des Schwenkarmes 22 angelenkte Greifelement 21 parallel zu den sternförmig angeordneten Anschluß- und Depotleisten 4,5 und zwischen diesen auswärts und einwärts geschwenkt werden. Bei einwärts geschwenktem Greifelement 21 kann unter Wirkung des Elektromotors 17 und des Riementriebes 18 die Drehachse 19 gedreht werden, um so das Greifelement 21 in einen anderen der Freiräume 13,14 zwischen den Anschluß- und Depotleisten 4,5 hineinzuschwenken.

Die Elektromotoren 17,24 sind in einer bevorzugten Ausführungsform als Schrittmotoren ausgebildet, um eine genaue Positionierung des Schwenkarmes 22 mit dem Greifelement 21 über definierte Schrittzahlen zu gewährleisten.

Die beschriebene automatische Verteilereinrichtung arbeitet wie folgt:

An die von der Oberseite des Zwischenbodens 3 her zugänglichen Schneidklemm-Kontaktelemente 8 der Anschlußleisten 4 werden zunächst die Teilnehmerkabel 7 angeschlossen.

Die in einer Kabelabfangung 30 unterhalb des unteren Endes der Drehachse 19 noch gebündelten und dann freigelegten Amtskabel 6 sind sämtlichst auf gleiche Länge geschnitten und an ihren freien Enden mit Steckern 12 versehen, die in die Steckelemente 11 der Depotleisten 5 eingesteckt sind. Die derart vorbereitete Verteilereinrichtung kann nunmehr über eine Fernsteuerung von einer nicht näher dargestellten Zentrale sowohl beschaltet als auch ohne das Vewenden zusätzlicher Rangierdrähte rangiert werden. Hierzu bedarf es nur der Betätigung der Elektromotoren 17,24 und des Greifelementes 21, die in nicht näher dargestellter Weise an die Fernsteuerung angeschlossen sind. Die Steuersignale und die Speisespannung werden über eine gemeinsame Doppelader zugeführt und über eine nicht dargestellte Weiche im Verteiler getrennt.

Zur Herstellung einer Leitungsverbindung zwischen einem Amts- und einem Teilnehmerkabel 6 bzw. 7 wird der Stecker 12 eines einem bestimmten Teilnehmerkabel 7 zuzuordnenden Amtskabel 6 vom Greifelement 21 ergriffen und durch dessen Schwenk- und Drehbewegung zum Steckelement 11 des betreffenden Teilnehmerkabels 7 verfahren und dort eingesteckt, woraufhin das Greifelement 21 gelöst und einem neuen Beschaltungsvorgang zugeführt werden kann. In entsprechender Weise erfolgt eine Rangierung einer bestehenden Leitung dadurch, daß der betreffende Stecker 12 eines Teilnehmerkabels 7 mittels des zu diesem verfahrenden Greifelemtes 21 aus dem zugehörigen Steckelement 11 herausgezogen und durch Verschwenken und Verfahren des Greifelementes 21 dem Steckelement 11 des neuen Teilnehmerkabels 7 zugeführt wird. Auf diese Weise erfolgen Beschalten und Rangieren der automatischen Verteilereinrichtung in gleicher Weise, wobei zum Rangieren kein Rangierdraht erforderlich ist. Die gleiche Länge aller Amtskabel 6, gerechnet von der Kabelabfangung 30 aus, bewirkt, daß jeder Stecker 12 eines jeden Amtskabels 6 jedem beliebigen Steckelement 11 eines Teilnehmerkabels 7 zugeführt werden kann. Da somit sämtliche Amtskabel 6 innerhalb des Gehäuses 1 relativ straff gespannt sind, kann der Schwenkarm 22 zusammen mit dem Greifelement 21 frei in den Freiräumen 13,14 zwischen den Anschluß- bzw. Depotleisten 4,5 verfahren bzw. verschwenkt werden.

Die automatische Verteilereinrichtung eignet sich nicht nur für Kupferkabel, sondern wegen der eindeutigen und großen Biegeradien auch für Lichtwellenleiter.

Um ohne Umrüstung der Rangier- und Verteilereinrichtung gleichermaßen Kupfer- und Glasfaserkabel anschließen zu können, sind im Beispiel die Stecker 12 für die Glasfaser- bzw. Kupferkabelanwendung so modifiziert, daß die Ansteuerungswege Z (Fig. 8) an den Leisten 4,5 für die Glasfaser- und für die Kupferkabelanwendung gleich lang sind. Auch die nicht dargestellten Aufnahmen für die Leisten 4,5 sind so gestaltet, daß diese sowohl Leisten 4,5 für Kupferkabel- als auch für Glasfaserbeschaltung aufnehmen können. Der Ansteuerungsweg Z entsprechend der Darstellung in der Fig. 8 ist als die Weglänge definiert, die beim Ziehen und beim Stecken der Stecker 12 an den Leisten 4,5 benötigt wird. In der Darstellung nach der Fig. 8 ist diese Weglänge Z durch einen Doppelpfeil gekennzeichnet. Die Stecker 12 müssen daher zusammen mit dem Schwenkarm 22 und dem Greifelement 21 für die Glasfaser- und die Kupferkabelanwendung eine gleiche Längenabmessung aufweisen. Das Verfahren des jeweiligen Steckers 12 zur Herstellung einer Leitungsverbindung zwischen einem Amts- und einem Teilnehmerkabel 6,7, durch eine Schwenk- und eine Drehbewegung des Greifelementes 21, erfolgt jedesmal von einem Referenzpunkt (Nullage) 38 aus, um technologisch bedingte Ungenauigkeiten an den Leisten 4,5 und im Steuerungsteil auszugleichen. Das Greifelement 21 wird nach jedem Beschaltungsvorgang in eine definierte Nullage 38 zurückgeführt und beginnt von dieser Nullage 38 aus erneut das Anfahren zu einem weiteren Beschaltungsvorgang. Der Referenzpunkt 38 bildet gleichzeitig einen Prüfpunkt und ist mit einem Steckplatz mit Prüfabgriff ausgerüstet, der die Überprüfung des Steckers 12 bzw. der Leitung erlaubt.

Die zwischen den einzelnen Beschaltungsvorgängen zurückzulegende Weglänge ist als Transportweg definiert und ist in der Fig. 8 durch die Doppelpfeile X,Y gekennzeichnet. Durch die Steuerung werden die Transportwege optimiert, indem die Stecker 12 aus der dem Verteilersegment zugeordneten Depotleiste 5 entnommen werden und der Steckplatz von der Nullage 38 ausgehend in der gleichen Bewegungsrichtung angefahren wird.

Die Transportwege werden durch Schrittzahlen definiert und mit den Schrittmotoren 17,24 (Fig. 1) realisiert. Dadurch ist eine zuverlässige Positionierung des Schwenkarmes 22 mit dem Greifelement 21 auf den Steck-bzw. Abzugsort 37 an den Leisten 4,5 gewährleistet. Die genaue Positionierung wird weiterhin durch in die Leisten 4,5 integrierte Abtastelemente 35 (Fig. 8) gewährleistet. In der Fig. 8 sind optische Abtastelemente 35 gewählt, die zusammen mit nicht dargestellten Lichtschranken wirksam werden. Es können ebenso mechanische oder berührungslos wirkende elektronische Abtastelemente 35, kapazitiv oder induktiv wirkende Elemente, eingesetzt sein. Aus der Kombination beider Positionierungsmittel, Schrittzahlen für die zurückzulegenden Weglängen und optische Abtastelemente 35, kann ein Referenzmodell zwischen den Weglängen und den Wegzeiten durch Schrittzahlen zu den Abtastmerkmalen aufgestellt und zur Fehlerkorrektur benutzt werden.

Die Stecker 12 weisen einen nicht dargestellten Verriegelungsmechanismus auf, der das Herausfallen der Stecker 12 aus den Leisten 4,5 verhindert und gleichzeitig eine Transportsicherung auf dem Weg zur nächsten Beschaltungsposition bildet. Der Verriegelungsmechanismus gewährleistet, daß beim Ziehen des Steckers 12 dieser in der Leiste 4,5 entriegelt und am Greifelement 21 verriegelt wird. Beim Stecken des Steckers 12 wird der Stecker 12 am Greifelement 21 entriegelt und in der Leiste 4,5 nach dem Stecken verriegelt.

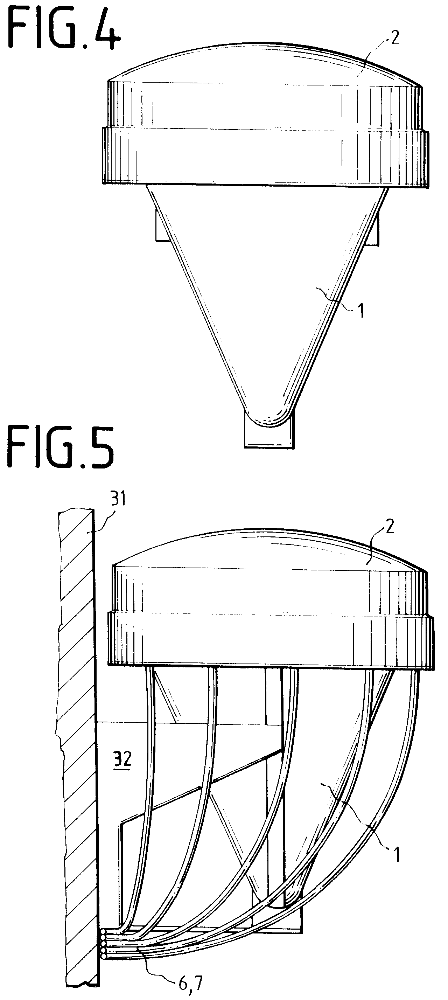

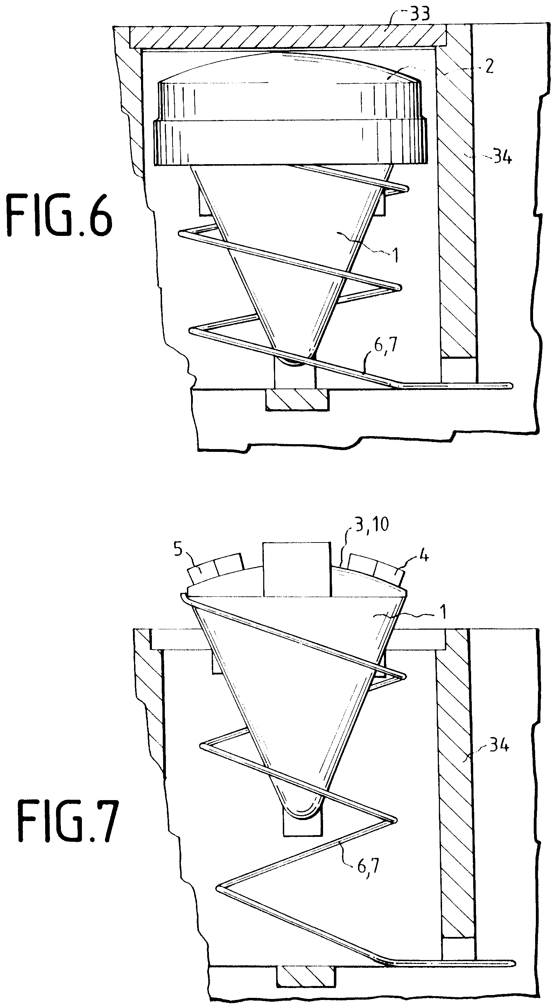

In den Figuren 4 bis 7 sind konkrete Ausführungsformen des kegelförmigen Gehäuses 1 und der dieses nach oben abschließenden Glocke 2 dargestellt. Die automatische Verteilereinrichtung kann somit gemäß Fig. 5 an einer Wand 31 mittels eines Kragarmes 32 gelagert werden, wobei die Amts- und Teilnehmerkabel 6,7 von unten in die Glocke 2 eingeführt und innerhalb der Glocke 2 bzw. am bodenseitigen Ende des kegelförmigen Gehäuses 1 festgelegt werden. Die Figuren 6 und 7 zeigen die besonders bevorzugte Anordnung der automatischen Verteilereinrichtung in Unterflurmontage, wobei innerhalb eines von einem Deckel 33 verschließbaren Schachtes 34 die automatische Verteilereinrichtung mit dem kegelförmigen Gehäuse 1 und der Glocke 2 gelagert ist. Die Kabelzuführung erfolgt spiralförmig oder auch wendelförmig von unten außerhalb des kegelförmigen Gehäuses 1 in die Glocke 2. Durch diese Unterfluranordnung arbeitet das Gehäuse 1 mit der Glocke 2 nach dem Caisson-Prinzip und läßt sich wasserfest installieren, wobei eventuell in den Schacht 34 eindringendes Wasser nicht in die Glocke 2 eindringen kann, da sich dort ein die Leitungsverbindungen schützendes Luftpolster bildet. Der Deckel 2 und das Gehäuse 1 sind so ausgeformt, daß bei Überflutungen das Wasser noch unterhalb der Kabeleinführungen gestoppt wird und selbst bei defekten Dichtungen nicht in das Innere des Gehäuses 1 eindringt.

Nach dem Abnehmen des Deckels 33 vom Schacht 34 kann die automatische Verteilereinrichtung mittels eines Hebezeuges gemäß Fig. 7 ausgehoben und nach Abnehmen der Glocke 2 im Bereich der Teilnehmerkabel 7 beschaltet werden. Die Amtskabel 6 sind erst nach dem Abnehmen des kegelförmigen Gehäuses 1 zugänglich, wozu dieses zweiteilig ausgebildet sein kann.

### BEZUGSZEICHENLISTE

- 01: Gehäuse
- 02: Glocke
- 03: Zwischenboden
- 04: Anschlußleiste
- 05: Depotleiste
- 06: Amtskabel
- 07: Teilnehmerkabel
- 08: Schneidklemm-Kontaktelement
- 09: Zentralachse
- 10: Kugelkalotte
- 11: Steckelement
- 12: Stecker
- 13: Freiraum
- 14: Freiraum
- 15: Öffnung
- 16: Beschaltungsgerät
- 17: Elektromotor
- 18: Riementrieb
- 19: Drehachse
- 20: Lagerarm
- 21: Greifelement
- 22: Schwenkarm
- 23: Ausstellarm
- 24: Elektromotor
- 25: Riementrieb
- 26: Vertikalantrieb
- 27: Spindel
- 28: Vertikalnut
- 29: Spindelmutter
- 30: Kabelabfangung
- 31: Wand
- 32: Kragen
- 33: Deckel
- 34: Schacht
- 35: Abtastelement
- 36: Transportweg
- 37: Steck-/Abzugsort
- 38: Referenzpunkt/Null.
- Z: Ansteuerungsweg
- Y: Transportweg
- X: Transportweg

## Patentansprüche

1. Automatische Rangier- und Verteilereinrichtung für Telekommunikations- und Datenleitungen, mit Anschlußterminals für Amts- und Teilnehmerkabel und mit einem fernsteuerbaren Beschaltungsgerät mit einem Greifelement, nach dem Patent Nr. 44 20 806,
**dadurch gekennzeichnet,**
daß die Ansteuerungswege (36) an den Leisten (4,5) für Glasfaser- und für Kupferkabelanwendung gleich lang gestaltet sind.

2. Automatische Rangier- und Verteilereinrichtung nach Anspruch 1, dadurch gekennzeichnet, daß die Stecker (12) einen Verriegelungsmechanismus aufweisen, der das Herausfallen der Stecker (12) aus den Leisten (4,5) verhindert und gleichzeitig eine Transportsicherung auf dem Weg zur nächsten Position bildet.

3. Automatische Rangier- und Verteilereinrichtung nach Anspruch 1, dadurch gekennzeichnet, daß mit den Leisten (4,5) Abtastelemente (35) verbunden sind zur genauen Positionierung des Schwenkarmes (22) mit dem Greifelement (21) auf den Steck- bzw. Abzugsort (37) an den Leisten (4,5).

4. Automatische Rangier- und Verteilereinrichtung nach den Ansprüchen 1 und 2, dadurch gekennzeichnet, daß die Transportwege (36) durch Schrittzahlen der Schrittmotoren (17,24) bestimmt sind.

5. Automatische Rangier- und Verteilereinrichtung nach Anspruch 1, dadurch gekennzeichnet, daß die beschalteten Leisten (4,5) von der Oberseite her zum Stecken von Prüfsteckern zugänglich sind.

6. Automatische Rangier- und Verteilereinrichtung nach Anspruch 1, dadurch gekennzeichnet, daß die Stecker (12) Griffflächen aufweisen.

7. Automatische Rangier- und Verteilereinrichtung nach Anspruch 1, dadurch gekennzeichnet, daß die Steuerung die Transportwege (36) optimiert, indem die Stecker (12) aus der dem Verteilersegment zugeordneten Depotleiste (5) entnommen werden und daß der Steckplatz von einer Nullage (Referenzpunkt) (38) ausgehend in der gleichen Bewegungsrichtung angefahren wird.

8. Automatische Rangier- und Verteilereinrichtung nach Anspruch 7, dadurch gekennzeichnet, daß der Referenzpunkt (38) gleichzeitig einen Prüfpunkt bildet und mit einem Steckplatz mit Prüfabgriff ausgerüstet ist, der die Überprüfung des Steckers (12) bzw. der Leitung erlaubt.

9. Automatische Rangier- und Verteilereinrichtung nach Anspruch 1, dadurch gekennzeichnet, daß die Steuersignale und die Speisespannung über eine gemeinsame Doppelader zugeführt und über eine Weiche im Verteiler getrennt sind.

10. Automatische Rangier- und Verteilereinrichtung nach Anspruch 1, dadurch gekennzeichnet, daß die Speisespannung einer normalen Teilnehmerleitung zur Pufferung der Batterie verwendet wird.

11. Automatische Rangier- und Verteilereinrichtung nach Anspruch 1, dadurch gekennzeichnet, daß der Deckel (2) und das Gehäuse (1) so ausgeformt sind, daß durch das Caisson-Prinzip bei Überflutungen das Wasser noch unterhalb der Kabeleinführungen gestoppt wird und selbst bei defekten Dichtungen nicht in das Innere des Gehäuses (1) eindringt.

12. Automatische Rangier- und Verteilereinrichtung nach Anspruch 1, dadurch gekennzeichnet, daß die Leisten (4,5) auch auf der Kabelanschlußseite der Kugelkalotte angepaßt bogenförmig ausgestaltet sind und daß die Schneid-Klemm-Kontaktelemente einer Leiste (4,5) ebenso wie die Kupplungselemente der Glasfaser-Kabel von gleicher Länge sind.
